(19) Europäisches Patentamt
European Patent Office
Office européen des brevets

(11) **EP 1 367 254 B1**

(12) **EUROPÄISCHE PATENTSCHRIFT**

(45) Veröffentlichungstag und Bekanntmachung des Hinweises auf die Patenterteilung:
**08.08.2007 Patentblatt 2007/32**

(51) Int Cl.:
*F02M 35/09* (2006.01)    *F02D 41/18* (2006.01)
*F02D 11/10* (2006.01)    *F02D 41/00* (2006.01)

(21) Anmeldenummer: **03010539.9**

(22) Anmeldetag: **10.05.2003**

(54) **Verfahren zum Überprüfen eines Luftzufuhrsystems bei einer Brennkraftmaschine**

Method for functional checking of an air intake device for a combustion engine

Procédé de vérification du dispositif d'admission d'air dans un moteur à combustion

(84) Benannte Vertragsstaaten:
**DE ES FR GB IT**

(30) Priorität: **29.05.2002 DE 10223899**

(43) Veröffentlichungstag der Anmeldung:
**03.12.2003 Patentblatt 2003/49**

(73) Patentinhaber: **Bayerische Motoren Werke Aktiengesellschaft**
**80809 München (DE)**

(72) Erfinder: **Finauer, Klaus**
**85235 Pfaffenhofen (DE)**

(56) Entgegenhaltungen:
WO-A-02/090751          DE-A1- 19 625 887
DE-A1- 19 834 762          US-B1- 6 213 068

**Beschreibung**

Die Erfindung betrifft ein Verfahren zum Überprüfen eines Luftzufuhrsystems bei einer Brennkraftmaschine gemäß dem Oberbegriff von Anspruch 1. Insbesondere betrifft die Erfindung die Werkstatt-Diagnose am Luftzufuhrsystem von Dieselmotoren mit verstellbaren Turboladern.

Das Luftzufuhrsystem einer Brennkraftmaschine besteht aus mehreren Bauteilgruppen, die in jedem Betriebspunkt für die optimale Frischluftversorgung des Motors sorgen. Fehlfunktionen an den Bauteilgruppen des Luftzufuhrsystems verursachen Störungen im Fahrbetrieb wie z.B. Leistungsmangel, Schwarzrauch, etc. Zu den Bauteilgruppen des Luftzufuhrsystems gehören Ladedrucksensor; Ansauglufttemperatursensor; Ladelufttemperatursensor; Luftmassenmesser (HFM); Abgasrückführsteller mit AGR- Ventil, Druckwandler, Pneumatik und elektrischer Ansteuerung des Druckwandlers; Ladedrucksteller (LDS) mit verstellbarem Turbolader, Druckwandler, Pneumatik und elektrischer Ansteuerung des Druckwandlers; Luftfilter, Luftschläuche, Ladeluftrohre, Ladeluftkühler, Abgasanlage, etc.

Um das Luftzufuhrsystem auf seine fehlerfreie Funktion überprüfen zu können, stehen üblicherweise zwei Verfahren zur Verfügung. Ein Verfahren beruht auf der Diagnose von Fehlerspeichereinträgen. Fehlerspeichereinträge beziehen sich entweder auf einen Stromkreis, z.B. Kurzschlusssignal des Luftmassenmessers, oder auf eine Funktion, z.B. "AGR positive Regelabweichung". Ein weiteres Verfahren beruht auf der Diagnose von einzelnen Bauteilgruppen anhand von Messwerten und Ansteuerungen über die Diagnoseschnittstelle eines Kraftfahrzeugs (siehe z.B. die Druckschrift US 6,213,068). Für einzelne Bauteilgruppen wie z.B. den Abgasrückführsteller können Messwerte aus dem Motorsteuergerät ausgelesen werden sowie Ansteuerungen aktiviert werden.

Ein Nachteil bei diesem Stand der Technik ist es, dass die Überprüfung des Luftzufuhrsystems schwierig ist, da sich die Bauteile des Luftzufuhrsystems gegenseitig beeinflussen. Ferner verursachen Defekte an verschiedenen Bauteilen des Luftzufuhrsystems oft ähnliche oder gleiche Effekte, so dass eine eindeutige Zuordnung zu einem speziellen Bauteil oft nicht oder nur mit Unsicherheit möglich ist. Außerdem gibt es viele Fehlerquellen bei den Bauteilen des Luftzufuhrsystems, insbesondere was mechanische und pneumatische Defekte anbetrifft. Diese Defekte werden durch die Eigendiagnose der Luftzufuhrsteuerung nicht eindeutig erkannt.

Diese Nachteile führen bei den derzeit angewandten Verfahren zur Überprüfung des Luftzufuhrsystems zu großer Unsicherheit und entsprechend hohem zeitlichen Aufwand. Darüber hinaus ist ein evtl. unnötiger Austausch von Bauteilen bzw. ein Austausch auf Verdacht mit hohen Kosten verbunden.

Darüber hinaus erhöhen sich die Anforderungen an Testroutinen für das Luftzufuhrsystem bei Fahrzeugen in absehbarer Zeit im Rahmen der "European On-Board Diagnostics"- Gesetze, nach denen in Zukunft die sog. "Readiness"-Bits, die angeben, ob die Überwachung der abgasrelevanten Fahrzeugkomponenten abgeschlossen ist, nach der Behebung abgasrelevanter Fehler bereits unter Werkstattbedingungen gesetzt werden sollen.

Aufgabe der vorliegenden Erfindung ist es daher, ein Verfahren anzugeben, mit dem eine treffsichere und schnelle Diagnose eines Luftzufuhrsystems einer Brennkraftmaschine möglich ist.

Diese Aufgabe wird erfindungsgemäß gelöst durch das Verfahren zum Überprüfen eines Luftzufuhrsystems bei einer Brennkraftmaschine nach Anspruch 1. Bevorzugte Ausführungsformen der Erfindung sind Gegenstand der Unteransprüche.

Bei dem erfindungsgemäßen Luftzufuhrsystemtest werden der Ladedrucksteller und der Abgasrückführsteller mit wechselnden Tastverhältnissen angesteuert, wodurch sich die Masse der angesaugten Frischluft verändert. Diese Veränderungen der Luftmasse werden gemessen und gespeichert. Anschließend folgt eine automatische Auswertung der gespeicherten Messdaten und Ausgabe des Prüfergebnisses.

Das erfindungsgemäße Verfahren zum Überprüfen eines Luftzufuhrsystems für die Zufuhr von Frischluft bei einer Brennkraftmaschine mit: einem Einlasssystem, das umfasst: einen Verdichter zum Verdichten der von außen angesaugten Frischluft, einen Ladeluftkühler zum Abkühlen der von dem Verdichter verdichteten Frischluft, und einem Auslasssystem, das umfasst: ein Rückführventil für eine Rückführung von Abgas in das Einlasssystem mit variabler Öffnung, einen Verdichterantrieb für das Antreiben des Verdichters mit variabler Antriebsleistung, ist gekennzeichnet durch die Schritte Verändern der Luftmasse der angesaugten Frischluft durch Variieren der Öffnung des Rückführventils und Variieren der Antriebsleistung des Verdichterantriebs, Erfassen und Abspeichern von Messwerten, die der Luftmasse entsprechen, in Abhängigkeit von der Öffnung des Rückführventils und der Antriebsleistung des Verdichterantriebs und Auswerten der Abhängigkeit gespeicherten Luftmassenwerte von der Öffnung des Rückführventils und der Antriebsleistung des Verdichterantriebs und Ausgabe des Prüfergebnisses.

Bei einer bevorzugten Ausführungsform der Erfindung wird zum Auswerten der Luftmassenwerte eine Reduzierung der Luftmasse ermittelt und eine Rückführventilfehlermeldung ausgegeben, wenn die Reduzierung wesentlich von einem vorgegebenen Wert abweicht.

Darüber hinaus wird bei einer weiteren bevorzugten Ausführungsform der Erfindung zum Auswerten der Luftmassenwerte eine Änderung der Reduzierung der Luftmasse gegenüber der Öffnung des Rückführventils ermittelt und eine Rückführventilfehlermeldung ausgegeben, wenn die Änderung wesentlich von einem vorgegebenen Wert abweicht.

Bei einer besonders bevorzugten Ausführungsform der Erfindung wird zum Auswerten ein Abstand zwischen den Luftmassenwerten bei einer ersten Antriebsleistung und einer zweiten Antriebsleistung des Verdichterantriebs ermittelt und eine Ladedruckstellerfehlermeldung ausgegeben, wenn der Abstand wesentlich von einem vorgegebenen Wert abweicht.

Bei einer weiteren besonders bevorzugten Ausführungsform der Erfindung werden wenigstens ein Änderungswert und wenigstens ein Abstandswert kombiniert, so dass eine Aussage über mindestens ein weiteres Bauteil des Luftzufuhrsystems möglich ist. Insbesondere kann zusätzlich zu den genannten Werten eine Abhängigkeit des Ladedruckes von der Aktivierung des Ladedruckstellers mit in die Beurteilung des Luftzufuhrsystems einfließen.

Insbesondere wird eine Soll- Istwert- Prüfung des Luftmassenmessers vor dem Erfassen der Luftmassenwerte. Dadurch werden Verfälschungen der Aussagen bei der Auswertung der Messergebnisse aufgrund einer Fehlfunktion des Luftmassenmessers ausgeschlossen.

Ein Vorteil der Erfindung besteht darin, dass es durch den erfindungsgemäßen Luftzufuhrsystemtest möglich ist, alle Bauteilgruppen des Luftzufuhrsystems mit einem einzigen, nahezu automatischen Prüfablauf auf ihre Funktion zu prüfen, so dass die Ursache einer Störung im Luftzufuhrsystem eindeutig auf die defekte Bauteilgruppe eingegrenzt werden kann. Ferner ist der Luftzufuhrsystemtest in der für Testmodule üblichen Programmiersprache programmiert, so dass keine aufwendige Anpassung an bereits vorhandene Software oder Hardware erforderlich ist.

Weitere Merkmale und Vorteile der Erfindung ergeben sich aus der Beschreibung von bevorzugten Ausführungsbeispielen, bei der Bezug genommen wird auf die beigefügten Zeichnungen.

Fig. 1 zeigt schematisch den Aufbau eines Luftzufuhrsystems einer Brennkraftmaschine.

Fig. 2 zeigt den Verlauf der Luftmassen-Reduzierung gegenüber der Öffnung des Rückführventils und die erfindungsgemäß daraus abgeleitete Aussage.

Fig. 3 zeigt eine Ausführungsform des erfindungsgemäßen Verfahrens in Form eines Flussdiagramms.

Fig. 4 zeigt Einzelheiten eines Verfahrensschrittes in Fig. 3.

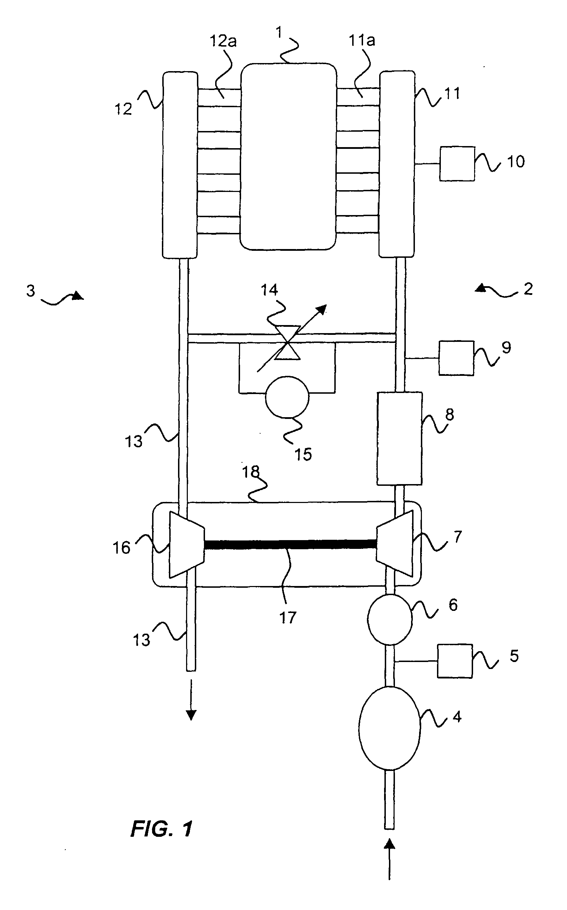

Das in Fig. 1 schematisch dargestellte Luftzufuhrsystem einer Brennkraftmaschine 1 lässt sich grob unterteilen in ein Einlasssystem 2 und ein Auslasssystem 3. Das Einlasssystem 2 umfasst: ein Luftfilter 4, in welchem die angesaugte Luft für die Versorgung der Brennkraftmaschine 1 gefiltert wird, so dass Schmutz- und Staubpartikel daraus entfernt werden. In einem anschließenden Ansauglufttemperatursensor 5 wird die Temperatur der gefilterten Frischluft erfasst. In Abhängigkeit von der Lufttemperatur wird die Frischluft weiteren Vorbereitungsschritten unterzogen, bevor sie zur Brennkraftmaschine 1 gelangt. Die Masse der angesaugten Frischluft wird in einem Luftmassensensor 6 erfasst, bei dem es sich insbesondere um einen Heißfilm- (HFM-) Sensor handelt.

Die angesaugte Frischluft wird anschließend in einem Verdichter 7 verdichtet, um mehr Kraftstoff in der Brennkraftmaschine verbrennen zu können. Da sie beim Verdichten aufgeheizt wird, folgt auf den Verdichter 7 ein Ladeluftkühler 8 zum Abkühlen der von dem Verdichter 7 verdichteten Frischluft. Die tatsächliche Temperatur der verdichteten und abgekühlten Frischluft wird von einem Ladelufttemperatursensor 9 erfasst. Außerdem wird der Druck der verdichteten und abgekühlten Frischluft von einem Ladedrucksensor 10 erfasst, bevor die Luft über eine Zylinderblockzufuhrleitung 11 und einzelne Zylinderzufuhrleitungen 11a in die Brennkraftmaschine 1 gelangt.

Die Abgase aus der Brennkraftmaschine 1 werden über einzelne Zylinderabgasleitungen 12a und eine Zylinderblockabgasleitung 12 aufgefangen und über ein Auslassrohr 13 in dem Auslasssystem 3 nach außen geführt.

Ein Teil der Abgase kann jedoch in das Einlasssystem 2 zurückgeführt werden. Damit lassen sich schärfere Anforderungen in Bezug auf Emissionssenkung der Brennkraftmaschine 1 erfüllen. Für die Rückführung eines Teils des Abgases umfasst das Auslasssystem 3 ein Rückführventil 14 mit einer (nicht dargestellten) variablen Öffnung, so dass sich die Menge an rückgeführtem und damit mehrmals im Brennvorgang eingesetzten Gases einstellen lässt. Der Ausgang des Rückführventils 14 ist mit dem Einlasssystem 2 zwischen dem Ladeluftkühler 8 und der Zylinderblockzufuhrleitung 11 verbunden.

Die Öffnung des Rückführventils 14 kann u.a. abhängen von dem Druckunterschied zwischen dem Einlasssystem 2 und dem Auslasssystem 3. Daher ist in Fig. 1 zur Veranschaulichung ein Differenzmanometer 15 parallel zu dem Rückführventil 14 gezeigt, das aber in der physikalischen Realisierung der Erfindung weggelassen werden kann.

Stromabwärts ist in dem Auslasssystem 3 eine Antriebsturbine 16 angeordnet, mit der die innere Energie des Abgases in dem Auslassrohr 13 genutzt wird, um mechanische Energie für den Antrieb des oben genannten Verdichters 7 zurückzugewinnen. Die Antriebsturbine 16 ist über eine Antriebswelle 17 mit der Verdichterturbine 7 verbunden, beide Turbinen bilden ein Bauteil des Luftzufuhrsystems, das im folgenden als Ladedrucksteller 18 bezeichnet wird. Die Antriebsturbine 16 umfasst (nicht dargestellte) Leitschaufeln, deren Neigung eingestellt werden kann, so dass die Effizienz der Turbine und damit die zurückgewonnene Energie an den gegebenen Bedarf angepasst werden kann. Mit anderen Worten, die Antriebsleistung für den Verdichter 7 ist variabel.

Wie oben bereits erwähnt ist das beschriebene Luftzufuhrsystem sehr komplex, und es lassen sich u.U. nur sehr schwierig Fehlerquellen mit Sicherheit identifizieren, wenn es zu einer Fehlfunktion kommt.

Das erfindungsgemäße Verfahren zur Durchführung einer Diagnose bei Fehlfunktion eines solchen Systems besteht darin, die Masse der angesaugten Frischluft und die Antriebsleistung für den Verdichter 7 zu variieren.

Die Masse der angesaugten Frischluft wird durch Variieren der Öffnung des Rückführventils 14 verändert. Die Antriebsleistung für den Verdichter 7 wird durch die Stellung der Leitschaufeln in der Antriebsturbine 16 verändert.

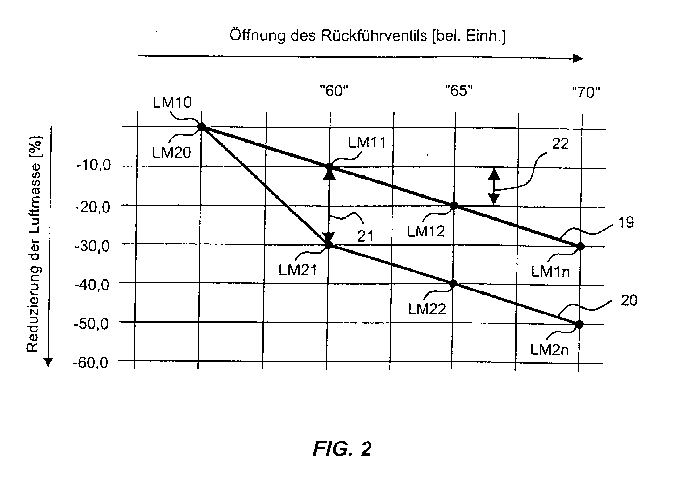

Bei einem Arbeitsdurchgang der Brennkraftmaschine 1 wird die Luftmasse LM durch den HFM- Sensor 6 erfasst und der erfasste Wert abgespeichert. Gleichzeitig wird der Öffnungsgrad des Rückführventils 14 erfasst und ebenfalls abgespeichert, so dass sich die Abhängigkeit der Frischluftmasse von der Öffnung des Rückführventils 14 ergibt. Dies ist in Fig. 2 dargestellt.

Wenn man als Parameter die Antriebsleistung des Verdichterantriebs 16 des Ladedruckstellers 18 verändert, so ergeben sich die beiden in Fig. 2 gezeigten Kurven 19 und 20. Bei der Kurve 19 ist die Antriebsturbine 16 geöffnet, d.h. die Antriebsleistung ist gering. Luft gelangt von dem Auslasssystem 3 über das Rückführventil 14 in das Einlasssystem 2 nur aufgrund des Öffnungsgrades des Rückführventils 14 und des relativ geringen Druckunterschiedes zwischen dem Einlass- und dem Auslasssystem. Die resultierende Luftmassenverringerung hängt wie aus Kurve 19 ersichtlich im wesentlichen linear von dem Öffnungsgrad des Rückführventils 14 ab.

Wird die Antriebsleistung des Ladedruckstellers 18 erhöht, so sinkt die Luftmasse in Abhängigkeit von dem Öffnungsgrad des Rückführventils 14 in stärkerem Maße als bei niedrigerer Antriebsleistung aufgrund eines höheren Druckunterschiedes zwischen dem Einlass- und dem Auslasssystem. Dies ist aus der Kurve 20 ersichtlich, die bei der gleichen Anfangsöffnung des Rückführventils 14 bei der gleichen Luftmassenreduzierung beginnt, allerdings bei der gleichen Endöffnung des Rückführventils 14 bei deutlich höherer Luftmassenreduzierung endet.

Der Verlauf der einzelnen Kurven 19 und 20 sowie der Unterschied zwischen den beiden Kurven 19 und 20, d.h. die Abhängigkeit der gemessenen Luftmasse von der Öffnung des Rückführventils 14 und der Antriebsleistung des Verdichterantriebs 16 wird ausgewertet, und das Prüfergebnis wird anschließend zur Diagnose des Luftzufuhrsystems ausgegeben.

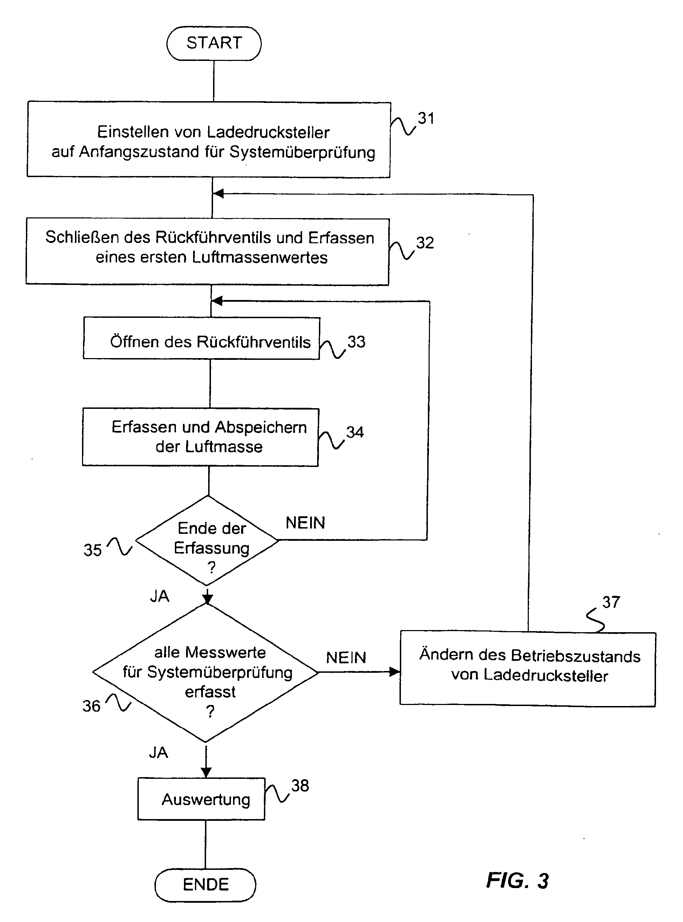

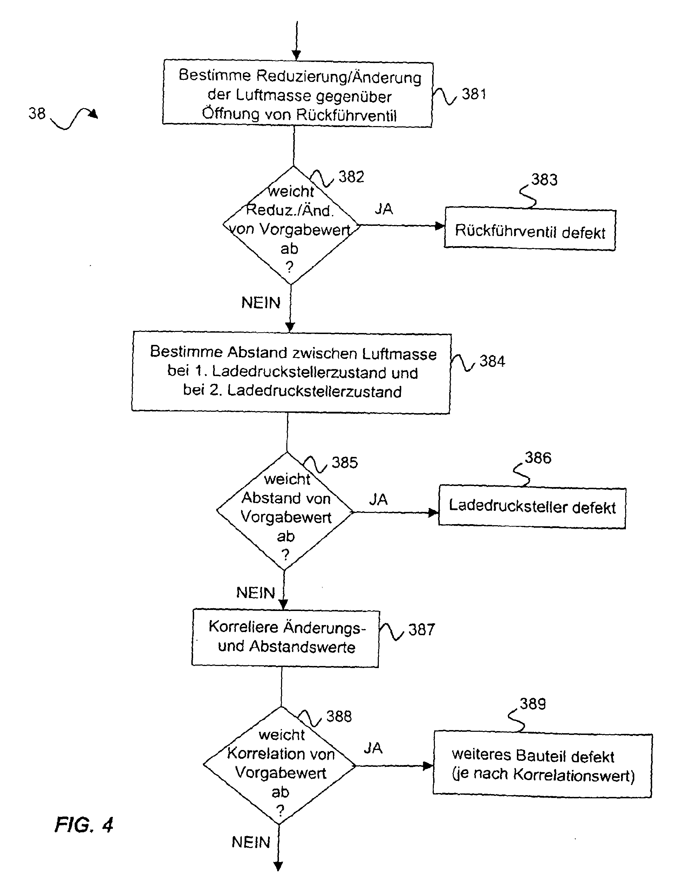

Die Analyse der gemessenen Luftmasse nach Fig. 2 wird im folgenden anhand eines Beispiels genauer erläutert, wobei Bezug genommen wird auf Fig. 3 und Fig. 4, in denen der entsprechende Verfahrensablauf jeweils als Flussdiagramm dargestellt ist.

Zur Überprüfung der Funktion des Rückführventils 14 und des Ladestellers 18 wird die Leerlaufdrehzahl auf 1500 min$^{-1}$ angehoben. Der Ladedrucksteller 18 wird in Schritt 31 in Fig. 3 so eingestellt, dass ein geringerer Ladedruck erzeugt wird. In der Praxis werden der Verdichterantrieb 16 und das Rückführventil 14 mit wechselnden Tastverhältnissen angesteuert. Im folgenden wird daher das Tastverhältnis als kennzeichnende Größe verwendet, hier wird also der Ladedrucksteller 18 so eingestellt, dass das Tastverhältnis minimal ist. Das Rückführventil 14 wird in Schritt 32 geschlossen. Die bei diesen Bedingungen in Schritt 34 gemessene Luftmasse wird im folgenden mit LM10 bezeichnet. Anschließend wird das Rückführventil 14 stufenweise geöffnet. Dazu wird in Schritt 35 überprüft, ob die Erfassung der Luftmasse in Abhängigkeit von dem Öffnungsgrad des Ventils 14 bereits abgeschlossen ist. Falls dies nicht der Fall ist, springt das Verfahren zurück zu Schritt 33, bei dem das Rückführventil 14 etwas weiter geöffnet wird. Anderenfalls springt das Verfahren sogleich zu Schritt 36, der weiter unten erläutert wird. Dann wird die Luftmasse in Schritt 34 erneut gemessen, alle Messwerte LM11, LM12, ... LM1n werden abgespeichert, so dass sich eine Kurve wie die als 19 bezeichnete in Fig. 2 ergibt.

Nach Abschluss der Erfassung der Luftmasse für die erste Messreihe wird in Schritt 36 überprüft, ob bereits alle für die Systemüberprüfung benötigten Messwerte vorliegen. Ist das nicht der Fall, wird in Schritt 37 der Ladedrucksteller 18 so angesteuert, dass das Tastverhältnis maximal wird, d.h. ein maximaler Ladedruck erzeugt wird. Das Rückführventil wird geschlossen, der gemessene Luftmassenwert ist LM20. Anschließend wird das Rückführventil wie oben beschrieben in den Schritten 32 bis 35 stufenweise geöffnet, und jeder Luftmassenwert wird als Messwert LM21, LM22, ... LM2n abgespeichert. Diese Messwerte ergeben die Kurve 20 in Fig. 2.

Wird dagegen in Schritt 36 festgestellt, dass alle für die Überprüfung und Beurteilung des Luftzufuhrsystems benötigten Messwerte vorhanden sind, werden diese in Schritt 38 ausgewertet.

Zur Überprüfung und Beurteilung des Luftzufuhrsystems, d.h. zur Diagnose einer Fehlfunktion wird dabei die prozentuale Reduzierung der Luftmasse mit steigender Öffnung des Rückführventils 14 bei beiden Kurven 19 und 20 analysiert. Dazu werden aus den Messwerten für jede Kurve 19 und 20 separat die folgenden Daten berechnet:

- Prozentuale Reduzierung der Luftmasse in Abhängigkeit vom Rückführventil-Tastverhältnis bei minimalem Ladedrucksteller- Tastverhältnis, d.h.

$$RED11 = \frac{LM11 - LM10}{LM10}, ..., RED1n = \frac{LM1n - LM10}{LM10};$$

- Prozentuale Reduzierung der Luftmasse in Abhängigkeit vom Rückführventil-Tastverhältnis bei maximalem Ladedrucksteller- Tastverhältnis, d.h.

$$RED21 = \frac{LM21 - LM20}{LM20} \, , \, ..., \quad RED2n = \frac{LM2n - LM20}{LM20} \, .$$

Anschließend wird der in Fig. 2 mit 21 bezeichnete Abstand der Luftmassen bei Kurve 19 (z.B. 5%-iges bzw. minimales Ladedrucksteller- Tastverhältnis) und bei Kurve 20 (z.B. 90%-iges bzw. maximales Ladedrucksteller- Tastverhältnis) in Abhängigkeit vom Rückführventil- Tastverhältnis gebildet, d.h.

$$DIFF1 = RED11 - RED21 \, , \, ..., \quad DIFFn = RED1n - RED2n \, .$$

Schließlich werden die in Fig. 2 mit 22 bezeichneten Änderungen zwischen den einzelnen Reduzierungen

$$dRED1 = RED12 - RED11 \, , \, ..., \quad dREDn = RED1(n+1) - RED1n$$

bei der Kurve 19 berechnet.

Diese Werte, durch die die Luftmassen-Reduzierung eindeutig charakterisiert wird, werden zur Diagnose von Fehlfunktionen des Rückführventils 14 und des Ladedruckstellers 18 verwendet. Dabei liegen zwei Effekte den gemessenen Werten zugrunde: a) Reduzierung der Luftmasse durch die Öffnung des Rückführventils 14 und b) Reduzierung der Luftmasse durch das maximale Ansteuern des Ladedruckstellers 18. Die Reduzierung durch das maximale Ansteuern des Ladedruckstellers 18 wird dadurch verursacht, dass das maximale Ansteuern des Ladedruckstellers einen Rückstau hinter der Brennkraftmaschine bewirkt und damit den Druckunterschied zwischen Einlasssystem 2 und Auslasssystem 3 erhöht. Durch den höheren Abgasdruck am Eingang des Rückführventils 14 wird bei gleicher Ansteuerung des Rückführventils 14 mehr Abgas in das Einlasssystem 2 zurückgeführt und somit die angesaugte Frischluftmasse noch weiter reduziert.

Die dargestellten Kurven 19 und 20 sind Sollkurven. Weichen die ermittelten Messwerte von diesen hier dargestellten Sollkurven ab, kann aus der Abweichung an sich sowie aus der Form der Kurven auf Fehler von dem Rückführventil 14 oder dem Ladedrucksteller 18 geschlossen werden.

Um Fehlinterpretationen mit noch größerer Sicherheit ausschließen zu können, wird bei einer bevorzugten Ausführungsform der Erfindung der Luftmassenmesser 6 geeicht, indem eine Soll- Istwert- Prüfung vor dem eigentlichen Erfassen der Luftmassenwerte LM10, LM20, ..., LM1n, LM2n vorgenommen wird. Dazu wird die angesaugte Luftmasse theoretisch berechnet und mit dem entsprechenden Signal des Luftmassenmessers 6 verglichen. Die Luftmasse lässt sich für jeden Betriebspunkt des Motors theoretisch berechnen aufgrund seines durch das Hubvolumen bei einer bestimmten Drehzahl gegebenen Durchsatzes sowie der Ladelufttemperatur und des Ladedruckes. An zwei Punkten, z.B. bei Abregeldrehzahl und im Leerlauf, wird der berechnete Wert für die Luftmasse mit dem gemessenen Wert verglichen, der aus dem Luftmassenmesser-Signal ermittelt wurde. Bei Abregeldrehzahl und voller Ansteuerung des Ladedruckstellers wird zusätzlich der Ladedruck gemessen. Der Vergleich von berechneter und gemessener Luftmasse lässt nun eine Bewertung des Luftmassenmesser-Signals zu.

Zusammen mit dem Ergebnis der Soll- Istwert- Prüfung des Luftmassenmessers ergibt sich dann ein Gesamtbild über die Funktionsfähigkeit des Luftzufuhrsystems. Als Messdaten werden in der automatischen Auswertung die folgenden Größen bewertet:

-   die berechnete Luftmasse, die gemessene Luftmasse und der maximal erreichte Ladedruck, die aus Istwert-Prüfung des Luftmassenmessers bekannt sind, und
-   die Werte:

RED11, ..., RED1n,
DIFF1, ..., DIFFn und
dRED1, ..., dREDn,

die aus der Prüfung des Rückführventils 14 und des Ladedruckstellers 18 bekannt sind.

Diese Werte werden mit Vergleichs- bzw. Grenzwerten verglichen. Aus jedem einzelnen Vergleich lässt sich dann eine Aussage über die Funktionsfähigkeit von bestimmten Komponenten des Luftzufuhrsystems herleiten. Aus der Kombination der Werte lässt sich eine Aussage über Folgefehler oder Mehrfachfehler im Luftzufuhrsystem herleiten.

Das entsprechende Verfahren ist in Fig. 4 kurz zusammengefasst. Dabei sind in Fig. 4 einzelne Schritte angegeben, die einen Teil der Auswertung in Schritt 38 in Fig. 3 darstellen.

Wenn in Schritt 36 in Fig. 3 festgestellt wird, dass alle für die Überprüfung und Beurteilung des Luftzufuhrsystems benötigten Daten vorliegen, wird in Schritt 381 in Fig. 4 (als Teil der Auswertung in Schritt 38) die Änderung $dRED1, ..., dREDn$ der Luftmassenreduzierung gegenüber der Öffnung des Rückführventils 14 ermittelt. Diese Änderung wird in Schritt 382 mit einem Vorgabewert verglichen. Stimmen ermittelte Änderung $dRED1, ..., dREDn$ und Vorgabewert im wesentlichen überein (beispielsweise bis auf 5% des Vorgabewertes), so wird die Überprüfung fortgeführt. Anderenfalls ist bereits anhand dieser ersten Analyse der Messwerte klar, dass ein Defekt des Rückführventils 14 vorliegt, und es wird in Schritt 383 ein entsprechendes Prüfergebnis ausgegeben.

Arbeitet das Rückführventil 14 fehlerfrei, wird in Schritt 384 der Abstand $DIFF1, ..., DIFFn$ zwischen Luftmassenwerten bei gleicher Öffnung des Rückführventils aber unterschiedlichem Ladedruckstellerzustand ermittelt. Auch hier wird das Ergebnis mit einem Vorgabewert verglichen. Stimmen ermittelter Abstand $DIFF1, ..., DIFFn$ und Vorgabewert im wesentlichen überein (beispielsweise bis auf 5% des Vorgabewertes), so wird die Überprüfung fortgeführt. Anderenfalls ist bereits anhand dieser Analyse der Messwerte klar, dass ein Defekt des Ladedruckstellers 18 vorliegt, und es wird in Schritt 386 ein entsprechendes Prüfergebnis ausgegeben.

Schließlich wird in der dargestellten Ausführungsform eine Korrelation der vorangehenden Analyseergebnisse durchgeführt. So können aufgrund der gesammelten Messergebnisse auch weitergehende Aussagen über die Funktion des Luftzufuhrsystems gemacht werden, die von dem Korrelationsergebnis abhängen. Dazu werden die Werte gegeneinander verriegelt und mit Hilfe einer Matrix so kombiniert, dass eine Aussage über evtl. defekte Bauteilgruppen des Luftzufuhrsystems auch bei mehreren Fehlern sicher möglich ist. Mit anderen Worten, es werden wenigstens ein Änderungswert $dRED1, ..., dREDn$ und wenigstens ein Abstandswert $DIFF1, ..., DIFFn$ sowie beispielsweise Werte aus der Soll-Istwert-Prüfung des Luftmassenmessers 6 und die erfassten Ladedruckwerte kombiniert, so dass eine Aussage über mindestens ein weiteres Bauteil des Luftzufuhrsystems möglich ist und Folge- bzw. Mehrfachfehler erkannt werden.

Allgemein wird ergänzend daraufhin gewiesen, dass das erfindungsgemäße Verfahren steuergerät-intern in einem der Brennkraftmaschine ohnehin zugeordneten elektronischen Steuergerät (Motorsteuergerät), z. B. durch Auslösen einer Systemüberprüfungsroutine, oder mittels eines fahrzeugexternen Diagnosegeräts durchführbar ist. Fahrzeugexterne Diagnosegeräte sind bekannt und sind üblicherweise über eine definierte Diagnoseschnittstelle mit den Fahrzeugsteuergeräten, insbesondere mit dem Motorsteuergerät, verbindbar. Eine steuergerät-interne Systemüberprüfungsroutine kann beispielsweise durch manuell zu betätigende fahrzeuginterne Bedienelemente (z. B. Gaspedalschalter, Kupplungsschalter, Zündschlossschalter usw.) ausgelöst werden, durch die direkt oder indirekt ein elektrisches bzw. elektronisches Signal an das Steuergerät abgegeben wird. Die Ausgabe des Prüfergebnisses kann beispielsweise eine "Ausgabe" an einen steuergerät-internen Fehlerspeicher sein, der erst in einem nächsten Schritt z. B. über ein fahrzeuginternes Display oder über ein fahrzeugexternes Diagnosegerät ausgelesen werden kann. Bei Durchführung des erfindungsgemäßen Verfahrens mittels eines fahrzeug-externen Diagnosegeräts wird die Ausgabe des Prüfergebnisses vorzugsweise auch über dieses Diagnosegerät vorgenommen.

**Bezugszeichen**

1    Verbrennungsmaschine
2    Einlasssystem
3    Auslasssystem
4    Luftfilter
5    Ansauglufttemperatursensor
6    Luftmassensensor, HFM- Sensor
7    Verdichter
8    Ladeluftkühler
9    Ladelufttemperatursensor
10   Ladedrucksensor
11   Zylinderblockzufuhrleitung, 11a einzelne Zylinderzufuhrleitung
12   Zylinderblockabgasleitung, 12a einzelne Zylinderabgasleitung
13   Auslassrohr
14   Rückführventil
15   Differenzmanometer

16      Turbine von Verdichterantrieb

17      Antriebswelle

18      Ladedrucksteller

19      Verlauf der Luftmassenreduzierung in Abhängigkeit von Rückführventilsöffnung bei niedrigerem Ladedruck

20      Verlauf der Luftmassenreduzierung in Abhängigkeit von Rückführventilsöffnung bei höherem Ladedruck

21      Differenz zwischen Luftmassenreduzierung bei niedrigerem und höherem Ladedruck

22      Steigung von Verlauf der Luftmassenreduzierung zwischen benachbarten Öffnungswerten der Rückführungsventils

31      Einstellen von Ladedrucksteller auf Anfangszustand für Systemüberprüfung

32      Schließen des Rückführventils und Erfassen eines ersten Luftmassenwertes

33      Öffnen des Rückführventils

34      Erfassen und Abspeichern der Luftmasse

35      Abfrage: Ende der Erfassung?

36      Abfrage: alle Messwerte für Systemüberprüfung erfasst?

37      Ändern des Betriebszustandes von Ladedrucksteller

38      Auswertung

381     Bestimme Änderung der Luftmasse gegenüber der Öffnung von Rückführventil

382     Abfrage: weicht Änderung von Vorgabewert ab?

383     Rückführventil defekt

384     Bestimme Abstand zwischen Luftmasse bei 1. Ladedruckstellerzustand und bei 2. Ladedruckstellerzustand

385     Abfrage: weicht Abstand von Vorgabewert ab?

386     Ladedrucksteller defekt

387     Korreliere Änderungs- und Abstandswerte

388     Abfrage: weicht Korrelation von Vorgabewert ab?

389     weiteres Bauteil defekt

## Patentansprüche

1.  Verfahren zum Überprüfen eines Luftzufuhrsystems für die Zufuhr von Frischluft bei einer Brennkraftmaschine (1) mit:

    einem Einlasssystem (2), das umfasst:
    einen Verdichter (7) zum Verdichten der von außen angesaugten Frischluft,
    einen Ladeluftkühler (8) zum Abkühlen der von dem Verdichter (7) verdichteten Frischluft,
    und einem Auslasssystem (3), das umfasst:

    ein Rückführventil (14) für eine Rückführung von Abgas in das Einlasssystem (2) mit variabler Öffnung,
    einen Verdichterantrieb (16, 17, 18) für das Antreiben des Verdichters (7) mit variabler Antriebsleistung,
    **gekennzeichnet durch**
    Verändern der Luftmasse der angesaugten Frischluft **durch** Variieren der Öffnung des Rückführventils (14) und Variieren der Antriebsleistung des Verdichterantriebs (16, 17, 18),
    Erfassen und Abspeichern von Messwerten (LM10, LM20, ..., LM1n, LM2n), die der Luftmasse entsprechen, in Abhängigkeit von der Öffnung des Rückführventils (14) und der Antriebsleistung des Verdichterantriebs (16, 17, 18) und
    Auswerten der Abhängigkeit gespeicherten Luftmassenwerte (LM10, LM20, ..., LM1n, LM2n) von der Öffnung des Rückführventils (14) und der Antriebsleistung des Verdichterantriebs (16, 17, 18) und Ausgabe des Prüfergebnisses.

2.  Verfahren nach Anspruch 1,
    **dadurch gekennzeichnet, dass**
    zum Auswerten der Luftmassenwerte (LM10, LM20, ..., LM1n, LM2n) eine Reduzierung ($RED11, ..., RED1n$) der Luftmasse ermittelt wird und
    eine Rückführventilfehlermeldung ausgegeben wird, wenn die Reduzierung wesentlich von einem vorgegebenen Wert abweicht.

3.  Verfahren nach Anspruch 1 oder 2,
    **dadurch gekennzeichnet,dass**
    zum Auswerten der Luftmassenwerte (LM10, LM20,..., LM1n, LM2n) eine Änderung ($dRED1, ... , dREDn,$ 22) der

Reduzierung der Luftmasse gegenüber der Öffnung des Rückführventils (14) ermittelt wird und eine Rückführventilfehlermeldung ausgegeben wird, wenn die Änderung wesentlich von einem vorgegebenen Wert abweicht.

4.  Verfahren nach einem der vorangehenden Ansprüche, **dadurch gekennzeichnet, dass** zum Auswerten ein Abstand *(DIFF*1*,..., DIFFn,* 21) zwischen den Luftmassenwerten (LM10, LM20, ..., LM1n, LM2n) bei einer ersten Antriebsleistung und einer zweiten Antriebsleistung des Verdichterantriebs (16, 17, 18) ermittelt wird und eine Ladedruckstellerfehlermeidung ausgegeben wird, wenn der Abstand wesentlich von einem vorgegebenen Wert abweicht.

5.  Verfahren nach den Ansprüchen 3 und 4, **dadurch gekennzeichnet,dass** wenigstens ein Änderungswert *(dRED*1*,..., dREDn ,* 22) und wenigstens ein Abstandswert (*DIFF*1*,..., DIFFn,* 21) kombiniert werden, so dass eine Aussage über mindestens ein weiteres Bauteil des Luftzufuhrsystems möglich ist.

6.  Verfahren nach einem der vorangehenden Ansprüche, **gekennzeichnet durch** eine Soll- Istwert- Prüfung des Luftmassenmessers vor dem Erfassen der Luftmassenwerte (LM10, LM20, ..., LM1n, LM2n).

## Claims

1.  A method of monitoring a system for supplying fresh air to an internal combustion engine (1) via:

    an intake system (2) comprising:

        a compressor (7) for compressing the fresh air sucked in from the exterior,
        a charge cooler (8) for cooling the fresh air compressed by the compressor (7) and

    an exhaust system (3) comprising
    a return valve (14) for recirculating exhaust gas in the intake system (2) and having a variable opening area and
    a variable-power drive (16, 17, 18) for driving the compressor (7),

    **characterised by**
    changing the mass of intaken fresh air by varying the opening area of the return valve (14) and varying the power of the compressor drive (16, 17, 18),
    acquiring and storing measurements (LM10, LM20, ..., LM1n, LM2n) corresponding to the mass of air, in dependence on the opening area of the return valve (14) and the power of the compressor drive (16, 17, 18) and
    evaluating the relation between the stored air mass values (LM10, LM20, ..., LM1n, LM2n) and the opening area of the non-return valve (14) and the power of the compressor drive (16, 17, 18) and outputting the test result.

2.  A method according to claim 1, **characterised in that** in order to evaluate the air-mass values (LM10, LM20, ..., LM1n, LM2n) a reduction (RED11, ...,*RED1n*) of the air mass is measured and a return valve fault report is output if the reduction substantially deviates from a default value.

3.  A method according to claim 1 or 2, **characterised in that** in order to evaluate the air-mass values (LM10, LM20, ..., LM1n, LM2n) a change (d*RED1, ..., dREDn,* 22) in the reduction of the air mass relative to the opening area of the return valve (14) is determined and a return valve fault report is output if the change differs substantially from a specified value.

4.  A method according to any of the preceding claims, **characterised in that** for the purpose of evaluation, a difference (*DIFF*1, ..., *DIFF*n*,* 21) is determined between the air mass values (LM10, LM20, ..., LM1n, LM2n) at a first and a second drive power of the compressor drive (16, 17, 18) and a boost controller fault report is output if the difference deviates substantially from a default value.

**5.** A method according to claims 3 and 4, **characterised in that**
at least one change value (d*RED*1*, ...,* d*RED*n, 22) and at least one difference value (*DIFF*1*, ..., DIFFn,* 21) are combined, so that information is obtainable about at least one additional component of the air supply system.

**6.** A method according to any of the preceding claims, **characterised by** a set-value and actual-value test of the air mass sensor before determination of the air mass values (LM10, LM20, ..., LM1n, LM2n).

## Revendications

**1.** Procédé pour vérifier un système d'amenée d'air pour l'amenée d'air frais au niveau d'un moteur à combustion interne (1), comportant :

- un système d'admission (2) comprenant :
- un compresseur (7) pour comprimer l'air frais aspiré de l'extérieur,
- un refroidisseur d'air de suralimentation (8) pour refroidir l'air frais comprimé par le compresseur (7),

et un système d'échappement (3) qui comprenant :

- une soupape de recyclage (14) pour un recyclage des gaz d'échappement vers le système d'admission (2), avec une ouverture variable,
- une commande de compresseur (16, 17, 18) pour la commande du compresseur (7) avec une puissance motrice variable,

**caractérisé en ce qu'**

- on fait varier de la masse d'air de l'air frais aspiré, en modifiant l'ouverture de la soupape de recyclage (14) et la puissance motrice de l'entraînement du compresseur (16, 17, 18),
- on saisit et ou enregistre en mémoire des valeurs de mesure (LM10, LM20, ..., LM1n, LM2n) qui correspondent à la masse d'air en fonction de l'ouverture de la soupape de recyclage (14) et de la puissance motrice de la l'entraînement du compresseur (16, 17, 18), et
- on exploite la dépendance des valeurs de masse d'air enregistrées (LM10, LM20, ..., LM1n, LM2n) par rapport à l'ouverture de la soupape de recyclage (14) et à la puissance motrice de l'entraînement du compresseur (16, 17, 18) et édition du résultat de vérification.

**2.** Procédé selon la revendication 1,
**caractérisé en ce que**
pour l'exploitation des valeurs de masse d'air (LM10, LM20, ..., LM1n, LM2n) on détermine une réduction (*RED*11, *..., RED*1*n*) de la masse d'air et on émet un signal de dysfonctionnement de la soupape de recyclage on émet lorsque la réduction s'écarte notablement d'une valeur prédéterminée.

**3.** Procédé selon la revendication 1 ou 2,
**caractérisé en ce que**,
pour l'exploitation des valeurs de masse d'air (LM10, LM20, ..., LM1n, LM2n), on détermine une variation (d*RED*1*, ...,* d*RED*n*,* 22) de la réduction de la masse d'air par rapport à l'ouverture de la soupape de recyclage (14) et on émet un signal de dysfonctionnement de la soupape de recyclage lorsque la variation s'écarte notablement d'une valeur prédéterminée.

**4.** Procédé selon une des revendications précédentes,
**caractérisé en ce que**
pour l'exploitation, on détermine un écart (*DIFF*1, ..., *DIFFn,* 21) entre les valeurs de masse d'air (LM10, LM20, ..., LM1n, LM2n) pour une première puissance motrice et une seconde puissance motrice l'entraînement du compresseur (16, 17, 18), et
on émet un signal de dysfonctionnement de l'actionneur de pression de suralimentation lorsque l'écart s'écarte notablement d'une valeur prédéterminée.

**5.** Procédé selon les revendications 3 et 4,
**caractérisé en ce qu'**

au moins une valeur de variation ($dRED$1, ..., $dRED$n, 22) et au moins une valeur d'écart (*DIFF*1, ..., *DIFFn,* 21) sont combinées de telle sorte qu'il est possible de fournir une information concernant au moins un autre composant du système d'amenée d'air.

6. Procédé selon une des revendications précédentes,
   **caractérisé par**
   une vérification de valeurs de consigne et réelle du capteur de masse d'air avant de déterminer les valeurs de masse d'air (LM 10, LM20, ..., LM1n, LM2n).

*FIG. 1*

Öffnung des Rückführventils [bel. Einh.]

"60"     "65"     "70"

LM10

LM20     LM11                    22

-10,0

LM12                            19

-20,0

21

LM21

-30,0     LM1n

LM22

-40,0

20

-50,0     LM2n

-60,0

Reduzierung der Luftmasse [%]

**FIG. 2**

**START**

Einstellen von Ladedrucksteller
auf Anfangszustand für Systemüberprüfung — 31

Schließen des Rückführventils und Erfassen
eines ersten Luftmassenwertes — 32

Öffnen des Rückführventils — 33

Erfassen und Abspeichern
der Luftmasse — 34

35 — Ende der Erfassung ? — NEIN

JA

36 — alle Messwerte für Systemüberprüfung erfasst ? — NEIN → Ändern des Betriebszustands von Ladedrucksteller — 37

JA

Auswertung — 38

**ENDE**

*FIG. 3*

38

Bestimme Reduzierung/Änderung
der Luftmasse gegenüber
Öffnung von Rückführventil · 381

weicht · 382
Reduz./Änd.
von Vorgabewert
ab
? → JA → Rückführventil defekt · 383

NEIN

Bestimme Abstand zwischen Luftmasse
bei 1. Ladedruckstellerzustand und
bei 2. Ladedruckstellerzustand · 384

weicht · 385
Abstand von
Vorgabewert
ab
? → JA → Ladedrucksteller defekt · 386

NEIN

Korreliere Änderungs-
und Abstandswerte · 387

weicht · 388
Korrelation von
Vorgabewert
ab
? → JA → weiteres Bauteil defekt
(je nach Korrelationswert) · 389

NEIN

*FIG. 4*

**EP 1 367 254 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6213068 B